# EUROPEAN PATENT APPLICATION

(11) **EP 1 653 421 A1**
(43) Date of publication of application: **03.05.2006**
(21) Application number: 04025659.6
(22) Date of filing: 28.10.2004
(51) Int. Cl.: G08B 25/08, G08B 13/22, H04M 11/04

(54) **A burglarproof apparatus and its method using mobile phone for an automobile**

(71) Applicant: Han, Geun-Soo, Pusan (KR)
(72) Inventor: Han, Geun-Soo, Pusan (KR)
(74) Representative: Müller, Frank Peter

(57) **Abstract**

Disclosed is a burglarproof apparatus for an automobile using a mobile phone, which includes a door sensor for recognizing opening and closing of a door and sending a control signal accordingly, an input unit installed near a driver seat for receiving image and voice and sending it to an in-car mobile phone, and an in-car mobile phone in wire connection to the door sensor and the input unit for wireless communication so that the in-car mobile phone makes a phone call to a mobile phone of an owner of the car when it is detected that the door is abnormally opened in order to prevent burglary of the car in advance and so that, even though the car is robbed, the car may be retaken with the use of GPS (geometric positioning system) of the in-car mobile phone installed in the car and through features, voice and surrounding noise input to and transmitted by the input unit.

## Description

### BACKGROUND OF THE INVENTION

### 1. Field of the Invention

The present invention relates to a burglarproof apparatus and its method using a mobile phone for an automobile, and more particularly a burglarproof apparatus for an automobile using a mobile phone, which includes a door sensor for recognizing opening and closing of a door and sending a control signal accordingly, an input unit installed near a driver seat for receiving image and voice and sending it to an in-car mobile phone, and an in-car mobile phone in wire connection to the door sensor and the input unit for wireless communication so that the in-car mobile phone makes a phone call to a mobile phone of an owner of the car when it is detected that the door is abnormally opened in order to prevent burglary of the car in advance and so that, even though the car is robbed, the car may be retaken with the use of GPS (geometric positioning system) of the in-car mobile phone installed in the car and through features, voice and surrounding noise input to and transmitted by the input unit.

### 2. Description of the Related Art

Generally, an automobile burglarproof device installed to a car just makes an alarm or locks doors when an external object is contacted to the car body or vibration beyond a certain level is detected. Thus, a person who intends to steal a car may ignore the alarm but forcibly open a door and then run away by driving the car. In addition, since pursuing location of the stolen car is not easy, it is very difficult to find out the stolen car in a short time.

### SUMMARY OF THE INVENTION

The present invention is designed to solve the problems of the prior art, and therefore it is an object of the present invention to provide a burglarproof apparatus using a mobile phone for an automobile, which includes a plurality of door sensors for recognizing opening and closing of a car door and sending a control signal; an input unit installed near a driver seat for inputting image and voice to an in-car mobile phone; and the in-car mobile phone wire- or wireless-connected to the door sensors and the in-car mobile phone for telephone communication with a car owner so that the apparatus may take an action in advance before burglary by making a wireless phone call to a mobile phone of a car owner when a burglar abnormally opens a car door, and so that the automobile may be pursued easily by means of GPS even though the automobile is stolen.

Another object of the present invention is to provide a burglarproof method using the apparatus.

### BRIEF DESCRIPTION OF THE DRAWINGS

Other objects and aspects of the present invention will become apparent from the following description of embodiments with reference to the accompanying drawing in which:

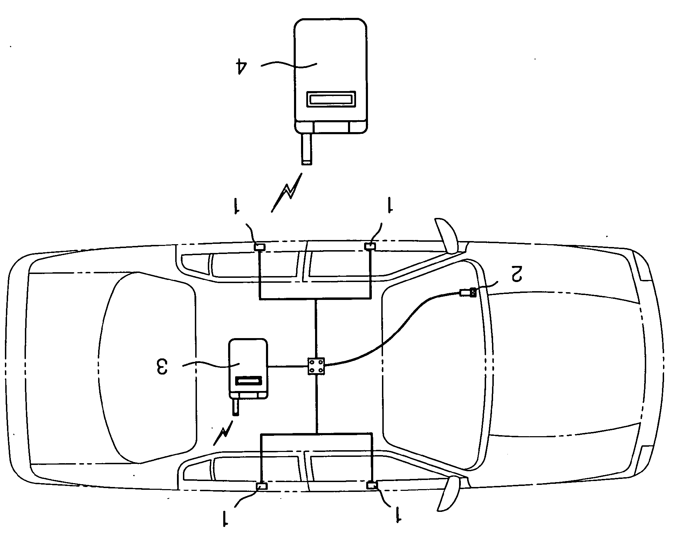

FIG. 1 is a schematic view showing a burglarproof apparatus according to the present invention.

### DETAILED DESCRIPTION OF THE PREFERRED EMBODIMENT

Hereinafter, the present invention will be described in more detail referring to the drawings.

A burglarproof apparatus using a mobile phone for an automobile according to the present invention includes a plurality of door sensors 1 for recognizing opening and closing of a car door and sending a control signal, an input unit 2 installed near a driver seat for sending image and voice of a driver or the like, and an in-car mobile phone 3 wire- or wireless-connected to the door sensors 1 and the in-car mobile phone 2 for telephone communication with a car owner. When the door sensor 1 detects that a door is abnormally opened by a theft or a door lock is abnormally unlocked by a theft, the in-car mobile phone 3 makes a phone call to a preset phone number of a mobile phone 4 of a car owner or the like.

The input unit 2 may include devices for inputting voice and image such as a small microphone and a CCD (couple-charged device) camera integrally, or it is also possible that two devices for inputting image and voice are separately provided.

The in-car mobile phone 3 should be able to make and receive a call, have a non-sound call incoming/outgoing function and an automatic call incoming/outgoing function, be registered for GPS (geometric positioning service), and be configured to make a phone call to a phone number preset by a user.

The burglarproof apparatus configured as mentioned above according to the present invention is installed to an automobile as shown in FIG. 1. At this time, the input unit 2 is installed near a driver seat, and the door sensors 1 are installed near a car door such as on a door, floor, roof or pillar. Of course, the door sensors 1, the input unit 2 and the in-car mobile phone are preferably installed not to be exposed outward so that a theft cannot catch sight of them.

The aforementioned components are operated in the following way in order to prevent burglary of an automobile and find a stolen automobile. That is, the door sensor 1 detects whether a car door is opened or whether a door lock is locked or unlocked. If the door lock is unlocked or the door is opened, the door sensor 1 sends a signal to the in-car mobile phone 3. The input unit 2 inputs image or voice in the stolen automobile and sends it to the in-car mobile phone 3. The in-car mobile phone 3 makes a call and sends the signal from the door sensor 1 and the image or voice signal from the input unit 2 to a preset phone number.

A method for preventing burglary of an automobile using a mobile phone on the basis of such a role of each component is now described.

If an alien unlocks any of locked door locks in order to open a car door in an abnormal way, any of the door sensors 1 detects that the door is opened and then sends a signal to the mobile phone 4. This signal becomes a call signal, and plays the same role as if a call button is pushed in the in-car mobile phone 3.

By means of the call signal, the in-car mobile phone 3 makes a call to a specific phone number. The phone number to be called is a phone number set to the in-car mobile phone 3 by a car owner, that is a final sending number or a final receiving number of the in-car mobile phone 3, and this phone number is automatically called.

When the in-car mobile phone 3 automatically makes a call as mentioned above, a phone number of the in-car mobile phone 3 is displayed on the mobile phone 4 of the car owner or a telephone in the home, so the car owner may become rapidly aware of the fact that the car door is opened and the car might be stolen. At this time, differently from the conventional car burglarproof devices, the present invention informs only the car owner through the in-car mobile phone 3, so the alien who enters into the automobile in an abnormal way cannot know whether the burglarproof apparatus is operated. Of course, the in-car mobile phone 3 makes and receives a call without sound.

The car owner then go to a place whether the automobile is parked and then checks the automobile so that the alien who invades into the automobile abandons theft or is arrested, thereby preventing burglary of the automobile.

The above procedure is useful for preventing burglary of an automobile in advance by attempting a phone call from the automobile to a car owner. Meanwhile, a method for making arrangements for a stolen automobile escaped from the control of an owner to find the automobile is as follows.

At this time, the automobile may be pursued by means of GPS (geometric positioning service) of the in-car mobile phone 3 installed in the automobile. In addition, if a car owner makes a call to the in-car mobile phone 3, the in-car mobile phone, which is shifted to an automatic receiving mode, automatically receives the call to ensure connection to the mobile phone 4 of the car owner.

The in-car mobile phone 3 sends image or voice of a burglar, who steels the automobile and runs away, to the mobile phone 4 of the car owner by means of a small microphone or a CCD (couple-charged device) camera, and then a location of the stolen automobile is pursued by means of GPS (geometric positioning service) subscribed by the car owner.

Thus, the car owner obtains features and voice of the burglar in a way similar to picture communications by making a phone call directly to the stolen automobile, so it is possible to check the fleeing burglar's identity. Of course, the location of the automobile may be simply found by geometric positioning service of the in-car mobile phone 3.

The burglarproof apparatus of the present invention configured as mentioned above may prevent burglary of an automobile since the door sensors 1 installed to the automobile detect whether a door lock is unlocked or a door is opened in an abnormal way by a burglar and then sends a call signal to the in-car mobile phone 3, and the in-car mobile phone 3 automatically sends the call signal to a phone number present by a car owner so that the car owner may be secretly informed of the fact. In addition, though an automobile is already stolen, a location of the automobile may be pursued by means of geometric positioning service of the in-car mobile phone 3, and an identity of the burglar may be easily checked by means of the input unit 2 connected to the in-car mobile phone 3, so arrangements of the stolen automobile and an arrest of the burglar may be made in a short time.

## Claims

1. A burglarproof apparatus using a mobile phone for an automobile, comprising:
a plurality of door sensors (1) for recognizing opening and closing of a car door and sending a control signal;
an input unit (2) installed near a driver seat for inputting image and voice to an in-car mobile phone (3); and
the in-car mobile phone (3) wire- or wireless-connected to the door sensors (1) and the in-car mobile phone (2) for telephone communication with a car owner.

2. The burglarproof apparatus using a mobile phone for an automobile according to claim 1,
wherein the in-car mobile phone (3) is a mobile phone capable of automatic call incoming and outgoing and GPS (geometric positioning service).

3. The burglarproof apparatus using a mobile phone for an automobile according to claim 1,
wherein the input unit (2) includes a CCD (charged-coupled device) camera for inputting image and a small microphone for inputting voice.

4. A method for preventing burglary of an automobile using a mobile phone, comprising:
sending a call signal when it is detected that a door is opened or a door lock is unlocked;
sending image or voice in the automobile by making a phone call to a preset phone number; and
pursuing a location of the automobile by using GPS of an in-car mobile phone (3) installed in the automobile.

5. A method for preventing burglary of an automobile using a mobile phone, comprising:
making a call from a car owner to an in-car mobile phone (3) installed in the automobile;
receiving voice or image in the automobile by means of the telephone call; and
pursuing a location of the automobile by using GPS of the in-car mobile phone (3).
